(19) **Europäisches Patentamt / European Patent Office / Office européen des brevets**

(11) **EP 4 495 856 A1**

(12) **EUROPEAN PATENT APPLICATION**
published in accordance with Art. 153(4) EPC

(43) Date of publication:
**22.01.2025 Bulletin 2025/04**

(21) Application number: **23770124.8**

(22) Date of filing: **25.01.2023**

(51) International Patent Classification (IPC):
**G06Q 10/0639** (2023.01)    **G06Q 50/04** (2012.01)

(52) Cooperative Patent Classification (CPC):
**G05B 19/418; G06Q 10/063; G06Q 10/0639;
G06Q 50/04**

(86) International application number:
**PCT/JP2023/002320**

(87) International publication number:
**WO 2023/176162 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022 JP 2022039716**

(71) Applicant: **OMRON Corporation
Kyoto 600-8530 (JP)**

(72) Inventors:
• **WADA, Hirotaka
Kyoto-shi, Kyoto 600-8530 (JP)**
• **ONDA, Hiroomi
Kyoto-shi, Kyoto 600-8530 (JP)**
• **NISHIYUKI, Kenta
Kyoto-shi, Kyoto 600-8530 (JP)**
• **MIYAZAKI, Masashi
Kyoto-shi, Kyoto 600-8530 (JP)**

(74) Representative: **SONN Patentanwälte GmbH & Co
KG
Riemergasse 14
1010 Wien (AT)**

(54) **TASK RECOGNITION DEVICE, TASK RECOGNITION METHOD, AND TASK RECOGNITION PROGRAM**

(57) A work recognition device includes a total task time acquisition unit, a reference time information acquisition unit, a task time calculation unit, a break setting unit and an output unit. The total task time acquisition unit acquires a total task time of a series of tasks performed by a worker. The reference time information acquisition unit acquires reference time information relating to reference times of the tasks in the series of tasks. The task time calculation unit calculates task times of the respective tasks performed by the worker on the basis of the total task time and the reference time information. The break setting unit sets breaks between the tasks of the series of tasks on the basis of the task times of the tasks performed by the worker. The output unit outputs break information relating to the breaks set between the tasks.

[FIG.1]

**Description**

TECHNICAL FIELD

The technology of the disclosure relates to a work recognition device, a work recognition method and a work recognition program.

BACKGROUND ART

In a factory, identifying bottlenecks in work and processes in which problems are likely to occur is important for improving product quality. Measurement of task times, which is fundamental when analyzing these issues, is very time-consuming to perform manually.

Accordingly, technologies that use learning models trained using machine learning to automatically identify task times have been proposed (for example, see Japanese Patent Application Laid-Open (JP-A) Nos. 2021-12586 and 2019-149154).

SUMMARY OF INVENTION

TECHNICAL PROBLEM

However, the technology recited in JP-A No. 2021-12586 may produce large errors, depending on the accuracy of the learning model.

Meanwhile, the technology recited in JP-A No. 2019-149154 requires massive amounts of training data for use in the machine learning.

When machining learning is not employed, a person must watch video images and identify and set when task breaks occur from scratch.

The disclosed technology is made in consideration of the points described above. An object of the disclosed technology is to provide a work recognition device, a work recognition method and a work recognition program that may obtain task times of respective tasks in a series of tasks performed by a worker more simply than when machine learning is employed.

SOLUTION TO PROBLEM

A first aspect of the disclosure is a work recognition device including: a total task time acquisition unit that acquires a total task time of a series of tasks performed by a worker; a reference time information acquisition unit that acquires reference time information relating to reference times of the respective tasks of the series of tasks; a task time calculation unit that calculates task times of the respective tasks performed by the worker on the basis of the total task time and the reference time information; a break setting unit that sets breaks between the tasks in the series of tasks on the basis of the task times of the respective tasks performed by the worker; and an output unit that outputs break information relating to the set breaks between the tasks.

As a result, task break (candidate) points may be displayed. Because a user need simply approve or adjust these candidates, effort by the user may be reduced. In addition, in contrast to using machine learning, massive training data is not required.

In the first aspect, the task time calculation unit may calculate the task times of the respective tasks on the basis of a ratio between a total reference time and the total task time, the total reference time being a total of the reference times of the respective tasks.

In the first aspect, the task time calculation unit may calculate the task times of the respective tasks by multiplying the reference times of the respective tasks with the ratio.

In the first aspect, the total task time acquisition unit may determine a start time of the series of tasks on the basis of output signals of a proximity sensor provided at a workbench at which a first task of the series of tasks is performed.

In the first aspect, the total task time acquisition unit may determine an end time of the series of tasks on the basis of output signals of a proximity sensor provided at a workbench at which a last task of the series of tasks is performed.

In the first aspect, the task time calculation unit may subtract the total task time of the series of tasks from an end time of a last task of the series of tasks to calculate a time that is a start time of a first task of the series of tasks.

A second aspect of the disclosure is a work recognition method including a computer executing processing that includes: acquiring a total task time of a series of tasks performed by a worker; acquiring reference time information relating to reference times of the respective tasks of the series of tasks; calculating task times of the respective tasks performed by the worker on the basis of the total task time and the reference time information; setting breaks between the tasks of the series of tasks on the basis of the task times of the respective tasks performed by the worker; and outputting break information relating to the set breaks between the tasks.

A third aspect of the disclosure is a work recognition program executable by a computer to execute processing that includes: acquiring a total task time of a series of tasks performed by a worker; acquiring reference time information relating to reference times of the respective tasks of the series of tasks; calculating task times of the respective tasks performed by the worker on the basis of the total task time and the reference time information; setting breaks between the tasks of the series of tasks on the basis of the task times of the respective tasks performed by the worker; and outputting break information relating to the set breaks between the tasks.

ADVANTAGEOUS EFFECTS OF INVENTION

According to the technology of the disclosure, task times of each of a series of tasks performed by a worker may be obtained more simply than when machine learning is employed.

BRIEF DESCRIPTION OF DRAWINGS

Fig. 1 is a structural diagram of a work recognition system.

Fig. 2 is a view, seen from information, of a situation in which a worker moves between plural workbenches and performs tasks.

Fig. 3 is a structural diagram showing hardware structures of a work recognition device.

Fig. 4 is a functional block diagram of the work recognition device.

Fig. 5 is a view for describing a situation in which proximity sensors are provided at workbenches.

Fig. 6 is a diagram showing an output waveform of a proximity sensor.

Fig. 7 is a diagram showing an example of reference time information.

Fig. 8 is a diagram showing relationships between task times of a novice and an expert and reference times.

Fig. 9 is a diagram showing a relationship between the reference times and calculated task times of the novice.

Fig. 10 is a diagram showing a relationship between actual task times of the novice and the calculated task times.

Fig. 11 is a diagram for describing errors between the actual task times and calculated task times of the novice.

Fig. 12 is a diagram showing a relationship between the reference times and calculated task times of the expert.

Fig. 13 is a diagram showing a relationship between actual task times of the expert and the calculated task times.

Fig. 14 is a diagram for describing errors between the actual task times and calculated task times of the expert.

Fig. 15 is a diagram showing an example of break information.

Fig. 16 is a diagram showing task times of respective tasks in respective cycles.

Fig. 17 is a flowchart of work recognition processing.

Fig. 18 is a view showing an example of a menu screen.

Fig. 19 is a diagram showing an example of a reference time file selection screen.

Fig. 20 is a diagram showing another example of the break information.

DETAILED DESCRIPTION

Below, an example of an embodiment of the present disclosure is described with reference to the drawings. In the drawings, the same reference symbols are assigned to structural elements and portions that are the same or equivalent. Proportional dimensions in the drawings may be exaggerated to facilitate description and may be different from actual proportions.

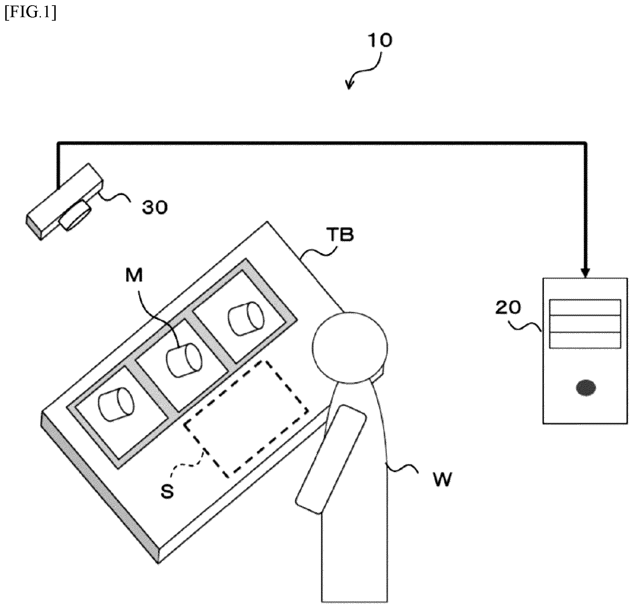

Fig. 1 is a structural diagram of a work recognition system 10. The work recognition system 10 is equipped with a work recognition device 20 and a camera 30.

The work recognition device 20 calculates task times of each of a series of tasks performed by a worker W on the basis of captured images imaged by the camera 30.

The worker W, for example, pulls up a work object M placed on a workbench TB and performs a predetermined task in a task space S.

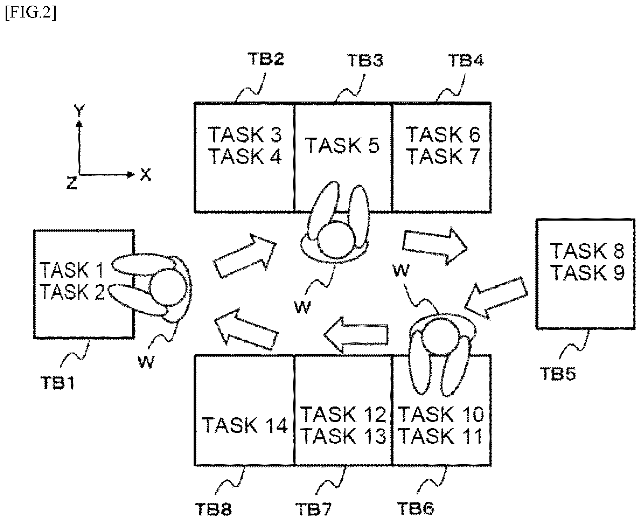

More specifically, as illustrated in Fig. 2, the worker W sequentially moves between plural workbenches TB and performs predetermined tasks at the workbenches TB. In the example in Fig. 2, eight workbenches TB1 to TB8 are disposed to surround the worker W. The worker W moves sequentially from workbench TB1 to workbench TB8, sequentially performing tasks 1 to 14. Tasks 1 to 14 are, as an example, the following tasks, but task details are not limited thus.

Task 1: Join component A to component B
Task 2: Fasten screws
Task 3: Fit to baseboard
Task 4: Clamping
Task 5: Electronic testing
Task 6: Mount component C
Task 7: Mount component D
Task 8: Air brushing
Task 9: Testing
Task 10: Pack instructions
Task 11: Product packing
Task 12: Print label
Task 13: Adhere label
Task 14: Load into shipping box

As shown in Fig. 2, the worker W performs tasks 1 and 2 at workbench TB1, performs tasks 3 and 4 at workbench TB2, performs task 5 at workbench TB3, performs tasks 6 and 7 at workbench TB4, performs tasks 8 and 9 at workbench TB5, performs tasks 10 and 11 at workbench TB6, performs tasks 12 and 13 at workbench TB7, and performs task 14 at workbench TB8.

Below, the plural workbenches may simply be referred to as the workbench(es) TB when not being distinguished. Note that positions of workbenches TB, numbers of the workbenches TB, types of tasks and numbers of tasks are not limited by the example in Fig. 2.

The camera 30 is, for example, an imaging device capable of imaging RGB color video images. The camera 30 is disposed at a position that facilitates recognition of movements of the worker W and all of the workbenches TB1 to TB8. More specifically, in the present exemplary embodiment a situation is described in which, as in the example illustrated in Fig. 2, the camera 30 is disposed at a position looking down on the worker W and the workbenches TB1 to TB8 from above. If the workbenches TB1 to TB8 are arranged in a row, the camera 30 may be disposed at a position capable of imaging the worker W and the workbenches TB1 to TB8 in a front view.

In the present exemplary embodiment, a configuration with one of the camera 30 is described, but a plural number of the camera 30 may be provided.

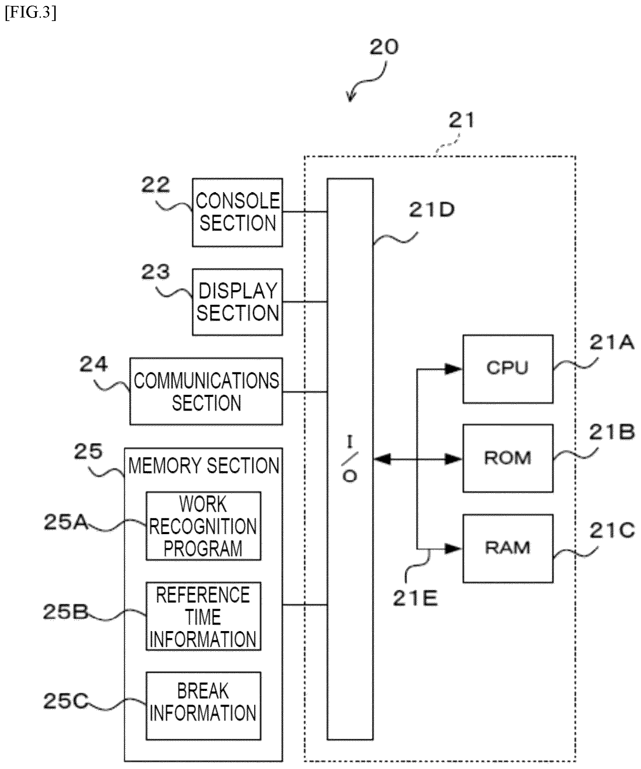

Fig. 3 is a block diagram showing hardware structures of the work recognition device 20 according to the present exemplary embodiment. As shown in Fig. 3, the work recognition device 20 is equipped with a controller 21. The controller 21 is structured by equipment including an ordinary computer.

As shown in Fig. 3, the controller 21 is provided with a central processing unit (CPU) 21A, read-only memory (ROM) 21B, random access memory (RAM) 21C and an input/output interface (I/O) 21D. The CPU 21A, ROM 21B, RAM 21C and input/output interface 21D are connected to one another via a bus 21E. The bus 21E includes a control bus, an address bus and a data bus.

The input/output interface 21D is connected to a console section 22, a display section 23, a communications section 24 and a memory section 25.

The console section 22 includes, for example, a mouse and a keyboard.

The display section 23 is structured as, for example a liquid crystal display or the like.

The communications section 24 is an interface for communicating data with external equipment such as the camera 30 and the like.

The memory section 25 is structured by a non-volatile external memory apparatus such as a hard disc or the like. As shown in Fig. 3, the memory section 25 memorizes a work recognition program 25A, reference time information 25B, break information 25C and so forth.

The CPU 21A is an example of a computer. The meaning of the term "computer" as used herein is intended to refer to broadly defined processors, encompassing general-purpose processors (for example, a CPU) and dedicated processors (for example a graphics processing unit (GPU), application-specific integrated circuit (ASIC), field programmable gate array (FPGA), programmable logic device or the like).

The work recognition program 25A is memorized at a non-volatile, non-transitory memory medium, or may be provided by being distributed via a network and installed as appropriate at the work recognition device 20.

A CD-ROM (compact disc read-only memory), magneto-optical disc, HDD (hard disk drive), DVD-ROM (digital versatile disc read-only memory), flash memory, memory card and so forth are envisaged as examples of a non-volatile, non-transitory memory medium.

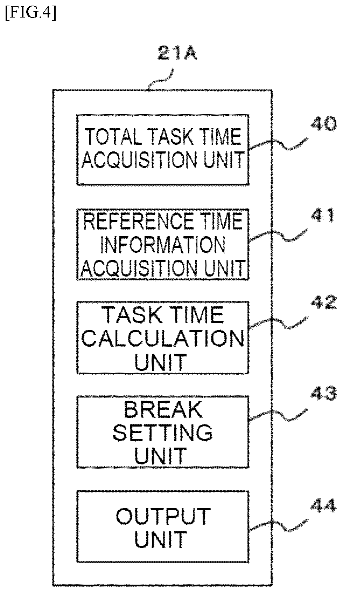

Fig. 4 is a block diagram showing functional structures of the CPU 21A of the work recognition device 20. As shown in Fig. 4, the CPU 21A includes the functional units of a total task time acquisition unit 40, a reference time information acquisition unit 41, a task time calculation unit 42, a break setting unit 43 and an output unit 44. The CPU 21A functions as these functional units by reading and executing the work recognition program 25A memorized at the memory section 25.

The total task time acquisition unit 40 acquires a total task time of a series of tasks performed by a worker. More specifically, in the example in Fig. 2, the total task time acquisition unit 40 acquires a total task time from when the worker W starts task 1 until the worker W ends task 14. In order to acquire the total task time, the total task time acquisition unit 40 must identify a start time at which task 1 is started and an end time at which task 14 is ended.

For example, the total task time acquisition unit 40 acquires movement information based on a video image in which the camera 30 images the worker W and the workbenches TB1 to TB8, identifies a timing at which the worker W makes a movement to start task 1 on the basis of the acquired movement information, and sets this timing as the start time of task 1. Similarly, the total task time acquisition unit 40 identifies a timing at which the worker W makes a movement to end task 14 on the basis of the acquired movement information, and sets this timing as the end time of task 14.

A publicly known technique known as "OpenPose", which is described in Reference Document 1 mentioned below, may be used as a method for acquiring movement information of the worker W. With OpenPose, skeletal information of a worker W may be detected from a captured image. More specifically, the skeletal information includes a location of the body of the worker W and coordinates of characteristic points such as joints and the like, link information defining links that connect the characteristic points, and labels representing body parts of the characteristic points. For example, the characteristic points include parts of the face of the worker W, such as the eyes, nose and the like, and joints such as the neck, shoulders, elbows, wrists, waist, knees, ankles and so forth.

OpenPose employs a trained model for which a learning model that inputs captured images and outputs skeletal information is trained using numerous captured images as teaching data. A publicly known technique such as, for example, CNN (regions with conversational neural networks) or the like can be used as a training method to provide the trained model.

Reference Document 1: "OpenPose: Realtime Multi-Person 2D Pose Estimation using Part Affinity Fields", Zhe Cao, Student Member, IEEE, Gines Hidalgo, Student Member, IEEE, Tomas Simon, Shih-En Wei, and Yaser Sheikh, IEEE TRANSACTIONS ON PATTERN ANALYSIS AND MACHINE INTELLIGENCE.

Movement information of the worker may be acquired by using motion sensors or the like instead of the camera 30.

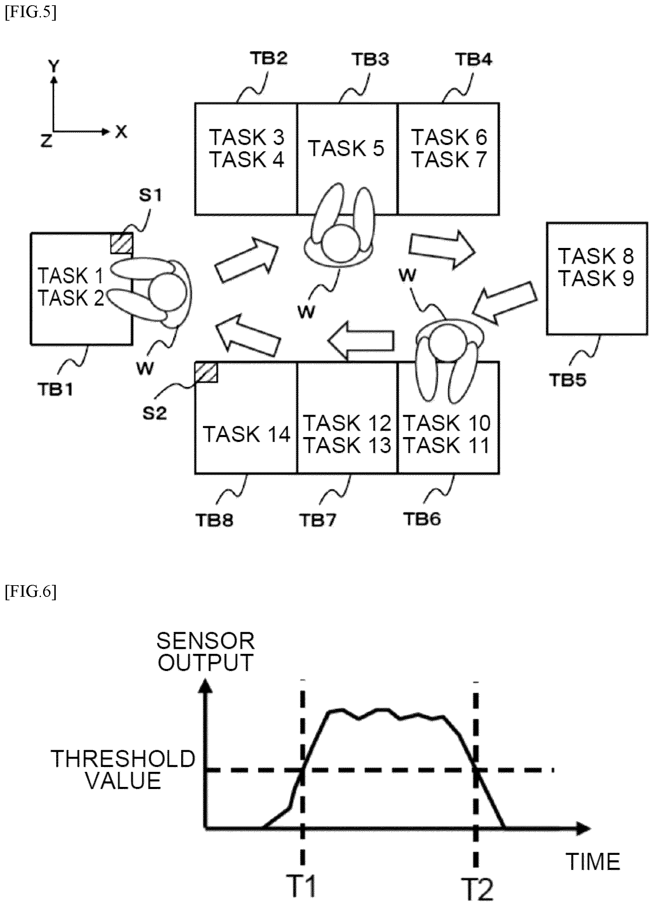

As shown in Fig. 5, a proximity sensor S1 may be provided at workbench TB1, and the start time of task 1 may be determined on the basis of output signals from the proximity sensor S1. For example, a time at which the proximity sensor S1 switches from off to on may be set as the start time of task 1. More specifically, as illustrated in Fig. 6, a time T1 at which a sensor output from the proximity sensor S1 rises above a threshold value is set as the start time of task 1.

As is also shown in Fig. 5, a proximity sensor S2 may be provided at workbench TB8, and the end time of task 14 may be determined on the basis of output signals from the proximity sensor S2. For example, a time at which the proximity sensor S2 switches from on to off may be set as the end time of task 14. More specifically, as illustrated in Fig. 6, a time T2 at which a sensor output from the proximity sensor S2 falls below a threshold value is set as the end time of task 14. In addition, a time T1 at which the sensor output of the proximity sensor S2 rises above a threshold value can be supposed to be a time at which the worker moves from the adjacent workbench TB7 to workbench TB8. Therefore, a task time T of task 14 may be calculated as T2 minus T1. Accordingly, to determine when task 14 has been completed more accurately, task 14 may be determined to be complete only if the task time T of task 14 is within a certain range.

For example, it may be determined that task 14 has ended only when the task time T is within the range shown below.

$$a \times Ts \leq T \leq b \times Ts \qquad (1)$$

In this expression, Ts represents a reference time for task 14, and a and b are predefined coefficients. For example, a may be set to 0.6 and b may be set to 2.0, but these are not limiting.

The meaning of the term "reference time" is intended to include a duration when, for example, a worker with standard proficiency performs a task in accordance with a standard task procedure, task method and task conditions and a margin of time is added. In other words, the reference time is a duration required when a usual person carries out the task in a usual way.

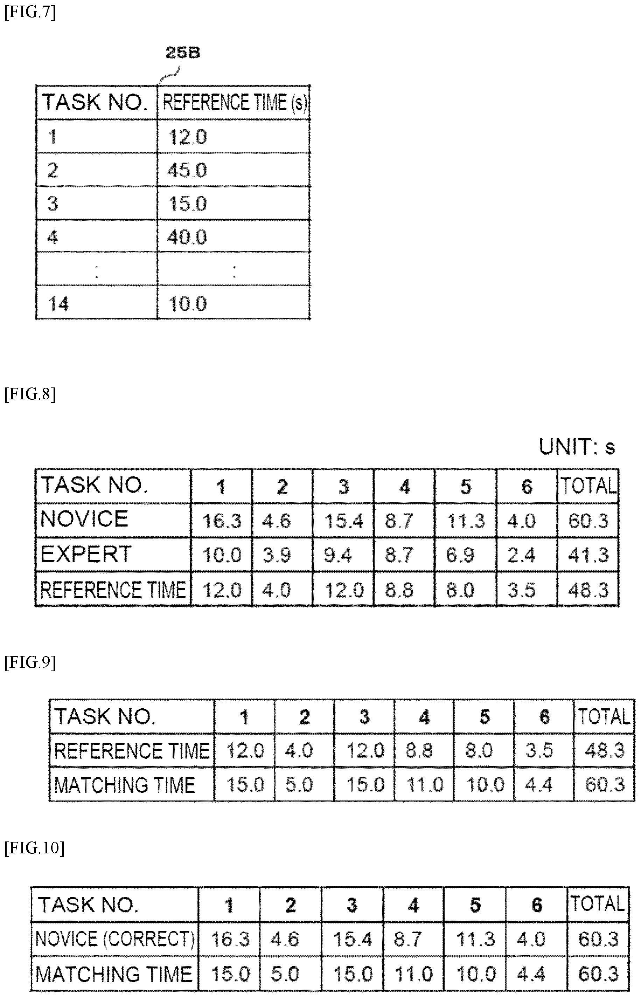

The reference time information acquisition unit 41 acquires reference time information relating to reference times of the tasks in the series of tasks. Fig. 7 shows an example of the reference time information 25B. As shown in Fig. 7, the reference time information 25B is table data representing correspondences between task numbers and the reference time information. The reference time information 25B is prepared for each category of different series of tasks.

The task time calculation unit 42 calculates task times of the tasks performed by the worker W on the basis of the total time information acquired by the total task time acquisition unit 40 and the reference time information acquired by the reference time information acquisition unit 41. More specifically, the task time calculation unit 42 calculates task times of the respective tasks on the basis of a ratio between a total reference time, which is the total of the reference times of the respective tasks, and the total task time. The ratio between the total reference time and the total task time is, for example, a value obtained by dividing the total task time by the total reference time.

In order to simplify descriptions below, for a situation in which the worker W performs six tasks, cases in which tasks 1 to 6 are performed by a novice and by an expert are described.

Fig. 8 shows examples of actual task times and the total task time of tasks 1 to 6 when the worker W is a novice, actual task times and the total task time of tasks 1 to 6 when the worker W is an expert, and reference times and a total reference time of tasks 1 to 6.

In the example in Fig. 8, the total reference time is 48.3 s and the total task time for the novice is 60.3 s. A ratio R between the total reference time TS and the total task time TW, that is, a value found by dividing the total task time TW by the total reference time TS, is R = TW/TS = 60.3/48.3 = 1.249.

If the task times of tasks 1 to 6 for the novice are represented by Tn (n is 1 to 6), and the reference times for tasks 1 to 6 are reference times represented by TSn (n is 1 to 6), the task times T1 to T6 of tasks 1 to 6 are calculated by the expression below.

$$Tn = TSn \times R \qquad (2)$$

That is, the task time Tn of each task is calculated by multiplying the reference time of the task TSn with the ratio R.

Fig. 9 shows results of calculating the task times (matching times) of tasks T1 to T6 when the worker W is the novice. In the example in Fig. 9, figures from the second decimal place onward are rounded off.

Fig. 10 shows correspondences between the actual (correct) task times of tasks 1 to 6 when the worker W is the novice shown in Fig. 8 and the matching times of tasks 1 to 6 shown in Fig. 9.

As shown in Fig. 10, the matching times of tasks 1 to 6 can be seen to be broadly close to the correct task times.

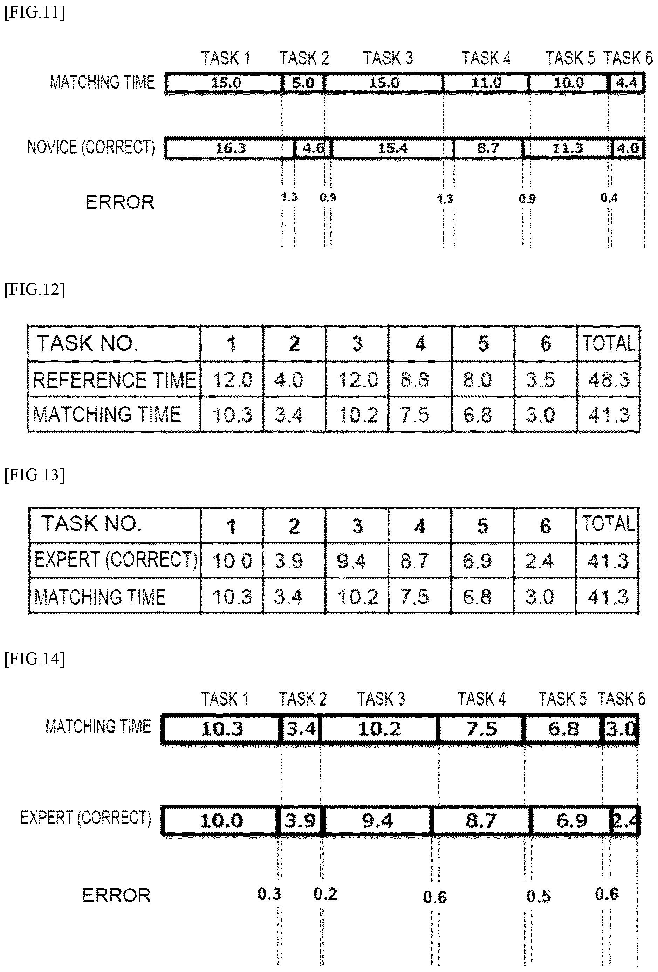

Fig. 11 shows the matching times of tasks 1 to 6, the task times of tasks 1 to 6 when the worker W is the novice and, as comparison results, errors in the timings of switching between the tasks. As shown in Fig. 11, the error in the timing of switching from task 1 to task 2 is 1.3 s, the error in the timing of switching from task 2 to task 3 is 0.9 s, the error in the timing of switching from task 3 to task 4 is 1.3 s, the error in the timing of switching from task 4 to task 5 is 0.9 s, and the error in the timing of switching from task 5 to task 6 is 0.4 s. Thus, it can be seen that errors in the timings of switching between the tasks are not particularly large.

When the worker W is the expert, task times when performing task 1 to task 6 are calculated in a similar way.

In the example in Fig. 8, the total reference time is 48.3 s and the total task time for the expert is 41.3 s. The ratio R between the total reference time TS and the total task time TW, that is, the value found by dividing the total task time TW by the total reference time TS, is R = TW/TS = 41.3/48.3 = 0.855.

The task times Tn of tasks 1 to 6 for the expert are calculated by the above expression (2).

Fig. 12 shows results of calculating the task times (matching times) of tasks T1 to T6 when the worker W is the expert. In the example in Fig. 12, figures from the second decimal place onward are rounded off.

Fig. 13 shows correspondences between the actual (correct) task times of tasks 1 to 6 when the worker W is the expert shown in Fig. 8 and the matching times of tasks 1 to 6 shown in Fig. 12.

As shown in Fig. 13, the matching times of tasks 1 to 6 can be seen to be broadly close to the correct task times.

Fig. 14 shows the matching times of tasks 1 to 6, the task times of tasks 1 to 6 when the worker W is the expert and, as comparison results, errors in the timings of switching between the tasks. As shown in Fig. 14, the error in the timing of switching from task 1 to task 2 is 0.3 s, the error in the timing of switching from task 2 to task 3 is 0.2 s, the error in the timing of switching from task 3 to task 4 is 0.6 s, the error in the timing of switching from task 4 to task 5 is 0.5 s, and the error in the timing of switching from task 5 to task 6 is 0.6 s. Thus, it can be seen that errors in the timings of switching between the tasks are not particularly large.

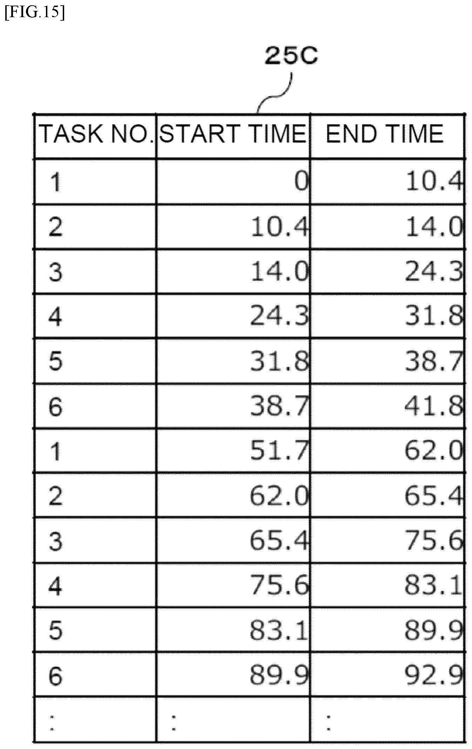

The break setting unit 43 sets breaks between the tasks in the series of task on the basis of the task times of the respective tasks performed by the worker W. The meaning of the term "breaks between tasks" includes start times and end times of the respective tasks. More specifically, the break setting unit 43 records the task times of the respective tasks calculated by the task time calculation unit 42 in the break information 25C, as shown in Fig. 15.

When, for example, only the end time of task 6, the last task in the series of tasks, is determined, the start time of task 1 in a second or subsequent cycle of the series of tasks is unclear. In this situation, the total task time of the series of tasks may be subtracted from the end time of the last task in the series of tasks to calculate a time that is recorded in the break information 25C as the start time of the first task in the series of tasks.

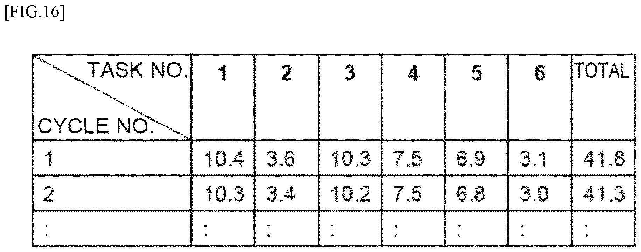

For example, as shown in Fig. 16, a total task time of the second cycle is 41.3 s. As shown in Fig. 15, the end time of the final task 6 in the second cycle is 92.9 s. In this situation, as shown in Fig. 15, the start time of task 1 in the second cycle is recorded in the break information 25C as 92.9-41.3 = 51.3 s.

The output unit 44 outputs and memorizes the break information 25C relating to breaks set between the tasks at, for example, the memory section 25.

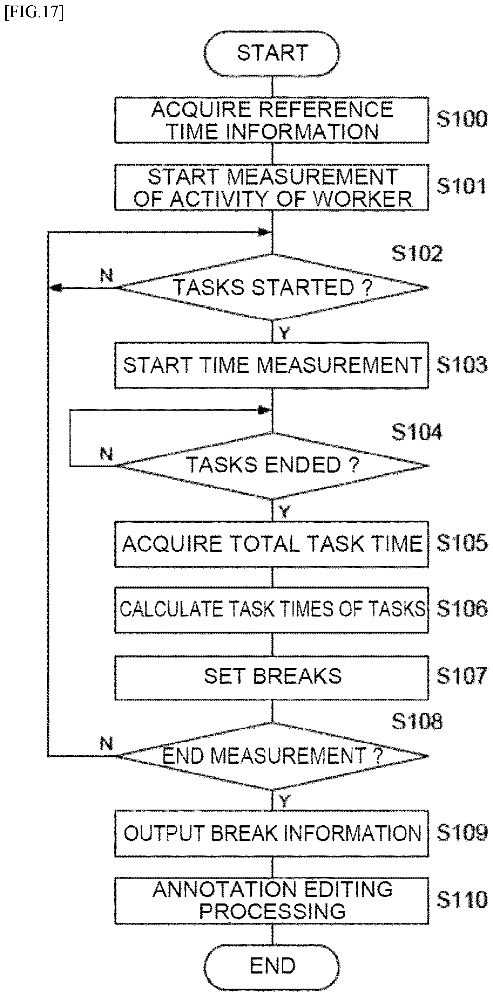

Now, work recognition processing that is executed by the CPU 21A of the work recognition device 20 is described with reference to the flowchart shown in Fig. 17. Below, a situation in which the worker W performs the series of tasks from task 1 to task 14 is described.

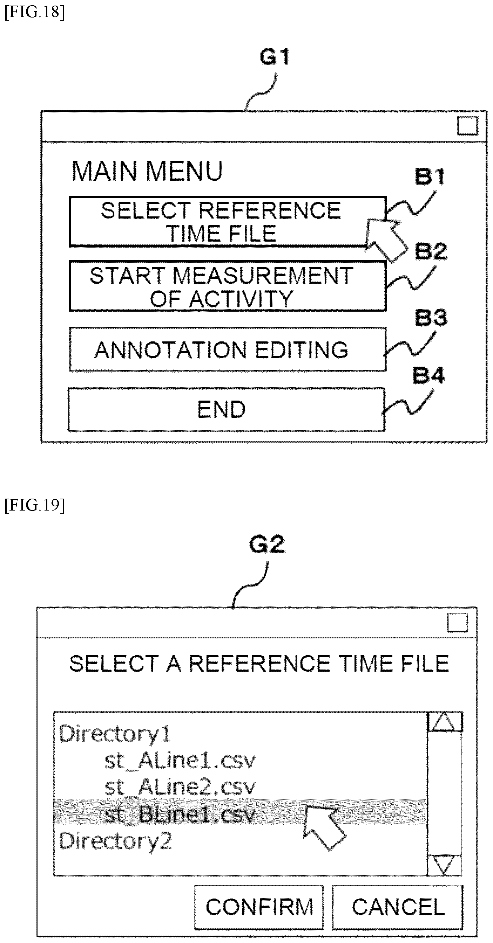

In step S100, the CPU 21A acquires the reference time information 25B. For example, a menu screen G1 as illustrated in Fig. 18 is displayed at the display section 23. The menu screen G1 includes a button B 1 for selecting a reference time file in which the reference time information 25B is recorded, a button B2 for starting measurement of activity by the worker W, a button B3 for editing annotations, and a button B4 for instructing the end of the processing.

when the button B 1 is pressed by an operator, a selection screen G2 for selecting a reference time file as illustrated in Fig. 19 is displayed at the display section 23. The operator selects a reference time file corresponding to the series of tasks to be performed by the worker W. Hence, the reference time information 25B may be acquired.

in step S101, the CPU 21C starts measurement of activity by the worker W. For example, when the operator presses the button B2 in menu screen G, the measurement of activity of the worker W begins. More specifically, acquisition of a video image imaged by the camera 30 begins.

In step S102, the CPU 21A makes a determination, based on the acquired video image, as to whether the worker W has made a movement to start task 1, the first task in the series of tasks. When it is determined that the worker W has made a movement to start task 1, the CPU 21A proceeds to step S103. On the other hand, when the worker has not made a movement to start task 1, this processing of making a determination as to whether the worker W has made a movement to start task 1 is repeated.

In step S103, the CPU 21A starts time measurement.

In step S104, the CPU 21A makes a determination, based on the acquired video image, as to whether the worker has made a movement to end task 14, the last task in the series of tasks. When it is determined that the worker W has made a movement to end task 14, the CPU 21A proceeds to step S105. On the other hand, when the worker has not made a movement to end task 14, this processing of making a determination as to whether the worker W has made a movement to end task 14 is repeated.

In step S105, the CPU 21A acquires a total task time. More specifically, the CPU 21A calculates the difference between the end time of task 14 and the start time at which time measurement started in step S103 as the total task time.

In step S106, on the basis of the reference time information 25B acquired in step S100 and the total task time acquired in step S105, the CPU 21A calculates task times of the respective tasks, task 1 to task 14, performed by the worker W.

In step S107, the CPU 21A records the task times of the respective tasks calculated in step S106 in the break information 25C.

In step S108, the CPU 21A makes a determination as to whether or not ending measurement has been instructed by the operator. When the end of measurement has been instructed, the CPU 21A proceeds to step S109. On the other hand, when the end of measurement has not been instructed, the CPU 21A proceeds to step S102 and repeats the processing described above.

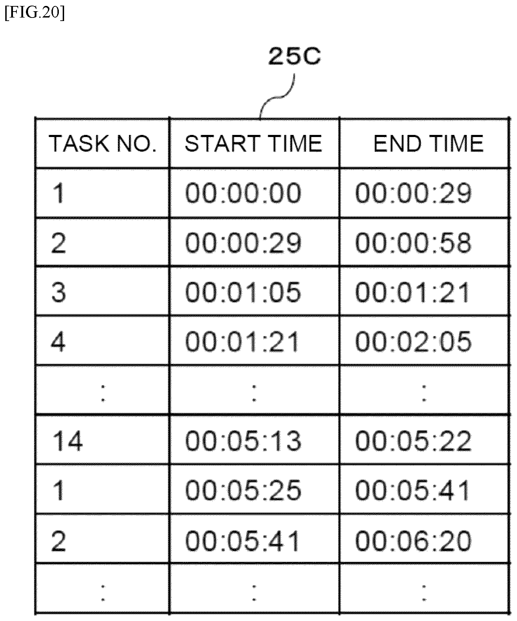

In step S109, the CPU 21A outputs and memorizes the break information 25C recording the start times and end times of all the tasks, as shown in Fig. 20, at the memory section 25.

In step S110, the CPU 21A accepts editing processing by the operator for annotating the video image acquired in step S100. For example, when the button B3 in menu screen G1 shown in Fig. 18 is pressed, editing processing that edits the video image in accordance with operations by the operator is executed. Using the break information 25C at this time enables easy switching of a replay position of the video image to start times of tasks and the like. Therefore, the burden of work in editing annotations is moderated.

Thus, in the present exemplary embodiment, task times of respective tasks in a series of tasks performed by a worker are calculated on the basis of a total task time of the series of tasks and reference times of the respective tasks. Therefore, an operator may obtain task times of the respective tasks in the series of tasks easily.

In the present exemplary embodiment, a situation in which tasks are performed at plural workbenches TB is described, but the technology of the disclosure is also applicable to a situation in which plural tasks are performed at a single workbench.

The exemplary embodiment described above is no more than an exemplary description of a structural example of the present disclosure. The present disclosure is not to be limited by the specific mode described above; numerous modifications are applicable within the scope of the technical gist of the disclosure.

The work recognition processing that, in the exemplary embodiment described above, is executed by a CPU reading software (a program) may be executed by various kinds of processor other than a CPU. Examples of processors in these cases include a PLD (programmable logic device) in which a circuit configuration can be modified after manufacturing, such as an FPGA (field-programmable gate array) or the like, a dedicated electronic circuit which is a processor with a circuit configuration that is specially designed to execute recognition processing, such as an ASIC (application-specific integrated circuit) or the like, and so forth. The work recognition processing may be executed by one of these various kinds of processors, and may be executed by a combination of two or more processors of the same or different kinds (for example, plural FPGAs, a combination of a CPU with an FPGA, or the like). Hardware structures of these various kinds of processors are, to be more specific, electronic circuits combining circuit components such as semiconductor components and the like.

The disclosures of Japanese Patent Application No. 2022-039716 are incorporated into the present specification by reference in their entirety. All references, patent applications and technical specifications cited in the present specification are incorporated by reference into the present specification to the same extent as if the individual references, patent applications and technical specifications were specifically and individually recited as being incorporated by reference.

## Claims

1. A work recognition device, comprising:

   a total task time acquisition unit that acquires a total task time of a series of tasks performed by a worker;
   a reference time information acquisition unit that acquires reference time information relating to reference times of respective tasks of the series of tasks;
   a task time calculation unit that calculates task times of the respective tasks performed by the worker based on the total task time and the reference time information;
   a break setting unit that sets breaks between tasks in the series of tasks based on the task times of the respective tasks performed by the worker; and
   an output unit that outputs break information relating to the set breaks between the tasks.

2. The work recognition device according to claim 1, wherein the task time calculation unit calculates the task times of the respective tasks based on a ratio between a total reference time and the total task time, the total reference time being a total of the reference times of the respective tasks.

3. The work recognition device according to claim 2, wherein the task time calculation unit calculates the task times of the respective tasks by multiplying the reference times of the respective tasks by the ratio.

4. The work recognition device according to any one of claims 1 to 3, wherein the total task time acquisition unit determines a start time of the series of tasks based on output signals of a proximity sensor provided at a workbench at which a first task of the series of tasks is performed.

5. The work recognition device according to any one of claims 1 to 4, wherein the total task time acquisition unit determines an end time of the series of tasks based on output signals of a proximity sensor provided at a workbench at which a last task of the series of tasks is performed.

6. The work recognition device according to any one of claims 1 to 3, wherein the task time calculation unit subtracts the total task time of the series of tasks from an end time of a last task of the series of tasks to calculate a time that is a start time of a first task of the series of tasks.

7. A work recognition method including a computer executing processing comprising:

acquiring a total task time of a series of tasks performed by a worker;
acquiring reference time information relating to reference times of respective tasks of the series of tasks;
calculating task times of the respective tasks performed by the worker based on the total task time and the reference time information;
setting breaks between tasks of the series of tasks based on the task times of the respective tasks performed by the worker; and
outputting break information relating to the set breaks between the tasks.

8. A work recognition program executable by a computer to execute processing comprising:

acquiring a total task time of a series of tasks performed by a worker;
acquiring reference time information relating to reference times of respective tasks of the series of tasks;
calculating task times of the respective tasks performed by the worker based on the total task time and the reference time information;
setting breaks between tasks of the series of tasks based on the task times of the respective tasks performed by the worker; and
outputting break information relating to the set breaks between the tasks.

[FIG.1]

[FIG.2]

[FIG.3]

[FIG.4]

[FIG.5]

[FIG.6]

[FIG.7]

**25B**

| TASK NO. | REFERENCE TIME (s) |
|----------|--------------------|
| 1 | 12.0 |
| 2 | 45.0 |
| 3 | 15.0 |
| 4 | 40.0 |
| ⋮ | ⋮ |
| 14 | 10.0 |

[FIG.8]

UNIT: s

| TASK NO. | 1 | 2 | 3 | 4 | 5 | 6 | TOTAL |
|----------|------|-----|------|-----|------|-----|-------|
| NOVICE | 16.3 | 4.6 | 15.4 | 8.7 | 11.3 | 4.0 | 60.3 |
| EXPERT | 10.0 | 3.9 | 9.4 | 8.7 | 6.9 | 2.4 | 41.3 |
| REFERENCE TIME | 12.0 | 4.0 | 12.0 | 8.8 | 8.0 | 3.5 | 48.3 |

[FIG.9]

| TASK NO. | 1 | 2 | 3 | 4 | 5 | 6 | TOTAL |
|----------|------|-----|------|------|------|-----|-------|
| REFERENCE TIME | 12.0 | 4.0 | 12.0 | 8.8 | 8.0 | 3.5 | 48.3 |
| MATCHING TIME | 15.0 | 5.0 | 15.0 | 11.0 | 10.0 | 4.4 | 60.3 |

[FIG.10]

| TASK NO. | 1 | 2 | 3 | 4 | 5 | 6 | TOTAL |
|----------|------|-----|------|------|------|-----|-------|
| NOVICE (CORRECT) | 16.3 | 4.6 | 15.4 | 8.7 | 11.3 | 4.0 | 60.3 |
| MATCHING TIME | 15.0 | 5.0 | 15.0 | 11.0 | 10.0 | 4.4 | 60.3 |

[FIG.11]

|  | TASK 1 | TASK 2 | TASK 3 | TASK 4 | TASK 5 | TASK 6 |
|---|---|---|---|---|---|---|
| MATCHING TIME | 15.0 | 5.0 | 15.0 | 11.0 | 10.0 | 4.4 |
| NOVICE (CORRECT) | 16.3 | 4.6 | 15.4 | 8.7 | 11.3 | 4.0 |
| ERROR | 1.3 | 0.9 | 1.3 | 0.9 | 0.4 | |

[FIG.12]

| TASK NO. | 1 | 2 | 3 | 4 | 5 | 6 | TOTAL |
|---|---|---|---|---|---|---|---|
| REFERENCE TIME | 12.0 | 4.0 | 12.0 | 8.8 | 8.0 | 3.5 | 48.3 |
| MATCHING TIME | 10.3 | 3.4 | 10.2 | 7.5 | 6.8 | 3.0 | 41.3 |

[FIG.13]

| TASK NO. | 1 | 2 | 3 | 4 | 5 | 6 | TOTAL |
|---|---|---|---|---|---|---|---|
| EXPERT (CORRECT) | 10.0 | 3.9 | 9.4 | 8.7 | 6.9 | 2.4 | 41.3 |
| MATCHING TIME | 10.3 | 3.4 | 10.2 | 7.5 | 6.8 | 3.0 | 41.3 |

[FIG.14]

|  | TASK 1 | TASK 2 | TASK 3 | TASK 4 | TASK 5 | TASK 6 |
|---|---|---|---|---|---|---|
| MATCHING TIME | 10.3 | 3.4 | 10.2 | 7.5 | 6.8 | 3.0 |
| EXPERT (CORRECT) | 10.0 | 3.9 | 9.4 | 8.7 | 6.9 | 2.4 |
| ERROR | 0.3 | 0.2 | 0.6 | 0.5 | 0.6 | |

[FIG.15]

25C

| TASK NO. | START TIME | END TIME |
|----------|-----------:|---------:|
| 1 | 0 | 10.4 |
| 2 | 10.4 | 14.0 |
| 3 | 14.0 | 24.3 |
| 4 | 24.3 | 31.8 |
| 5 | 31.8 | 38.7 |
| 6 | 38.7 | 41.8 |
| 1 | 51.7 | 62.0 |
| 2 | 62.0 | 65.4 |
| 3 | 65.4 | 75.6 |
| 4 | 75.6 | 83.1 |
| 5 | 83.1 | 89.9 |
| 6 | 89.9 | 92.9 |
| ⋮ | ⋮ | ⋮ |

[FIG.16]

| TASK NO.<br>CYCLE NO. | 1 | 2 | 3 | 4 | 5 | 6 | TOTAL |
|---|---|---|---|---|---|---|---|
| 1 | 10.4 | 3.6 | 10.3 | 7.5 | 6.9 | 3.1 | 41.8 |
| 2 | 10.3 | 3.4 | 10.2 | 7.5 | 6.8 | 3.0 | 41.3 |
| : | : | : | : | : | : | : | : |

[FIG.17]

[FIG.18]

**G1**

MAIN MENU

| SELECT REFERENCE TIME FILE | **B1** |

| START MEASUREMENT OF ACTIVITY | **B2** |

| ANNOTATION EDITING | **B3** |

| END | **B4** |

[FIG.19]

**G2**

SELECT A REFERENCE TIME FILE

Directory1
 st_ALine1.csv
 st_ALine2.csv
 st_BLine1.csv
Directory2

CONFIRM    CANCEL

[FIG.20]

**25C**

| TASK NO. | START TIME | END TIME |
|----------|------------|----------|
| 1 | 00:00:00 | 00:00:29 |
| 2 | 00:00:29 | 00:00:58 |
| 3 | 00:01:05 | 00:01:21 |
| 4 | 00:01:21 | 00:02:05 |
| ⋮ | ⋮ | ⋮ |
| 14 | 00:05:13 | 00:05:22 |
| 1 | 00:05:25 | 00:05:41 |
| 2 | 00:05:41 | 00:06:20 |
| ⋮ | ⋮ | ⋮ |

## INTERNATIONAL SEARCH REPORT

| International application No. |
| --- |
| **PCT/JP2023/002320** |

**A.    CLASSIFICATION OF SUBJECT MATTER**

*G06Q 10/0639*(2023.01)i; *G06Q 50/04*(2012.01)i
FI:    G06Q10/0639; G06Q50/04

According to International Patent Classification (IPC) or to both national classification and IPC

**B.    FIELDS SEARCHED**

Minimum documentation searched (classification system followed by classification symbols)
G06Q10/0639; G06Q50/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2012-234427 A (MITSUBISHI HEAVY IND LTD) 29 November 2012 (2012-11-29) entire text, all drawings | 1-8 |
| A | JP 2019-032666 A (FUJITSU LTD) 28 February 2019 (2019-02-28) entire text, all drawings | 1-8 |
| A | JP 2007-193581 A (HITACHI SOFTWARE ENG CO LTD) 02 August 2007 (2007-08-02) entire text, all drawings | 1-8 |

☐ Further documents are listed in the continuation of Box C.      ☑ See patent family annex.

| | |
| --- | --- |
| \*     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **10 April 2023** | **18 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/002320**

| Patent document cited in search report | | | Publication date (day/month/year) | Patent family member(s) | Publication date (day/month/year) |
|---|---|---|---|---|---|
| JP | 2012-234427 | A | 29 November 2012 | (Family: none) | |
| JP | 2019-032666 | A | 28 February 2019 | (Family: none) | |
| JP | 2007-193581 | A | 02 August 2007 | (Family: none) | |

Form PCT/ISA/210 (patent family annex) (January 2015)

**REFERENCES CITED IN THE DESCRIPTION**

**Patent documents cited in the description**

- JP 2021012586 A
- JP 2019149154 A
- JP 2022039716 A